# EUROPEAN PATENT APPLICATION

(11) **EP 4 813 580 A1**
(43) Date of publication of application: **30.09.2026**
(21) Application number: 24894732.7
(22) Date of filing: 29.08.2024
(51) Int. Cl.: B25J 9/16, B25J 13/08, G06T 3/40, G06T 7/60

(54) **METHOD OF SETTING COLLISION INFORMATION FOR ROBOT MOTION SIMULATIUON, AND APPARATUS FOR PERFORMING THE SAME**

(30) Priority: 21.11.2023 KR 20230161788
(71) Applicant: Rainbow Robotics Inc., Sejong-si 30141 (KR)
(72) Inventor: OH, Jae Sung, Daejeon 34637 (KR); BAE, Hyo In, Daejeon 35355 (KR); LEE, Joon Woo, Daejeon 34138 (KR); JEONG, Eun Ho, Daejeon 34052 (KR); CHOI, Soo Young, Suwon-si Gyeonggi-do 16505 (KR)
(74) Representative: Viering, Jentschura & Partner mbB Patent- und Rechtsanwälte
(86) International application number: PCT/KR2024/096116
(87) International publication number: WO 2025/110842

(57) **Abstract**

The present disclosure relates to a method of setting collision information for a robot motion simulation and a device for performing the same, and the method may include acquiring robot installation information, risk area information, and collision-prone body part information for each risk area for a workspace of the robot; setting a check point to determine a risk of collision for the robot; and calculating coordinate information and shape information on the check point based on at least some of the acquired information and the set check point.

## Description

### TECHNICAL FIELD

The present disclosure relates to a method of setting collision-related information such as area information around a robot and tool information mounted on the robot to simulate a motion of the robot.

### BACKGROUND ART

A robot refers to a machine that automatically processes or operates tasks given by its own ability, and the application fields of robots may be classified into industrial, service, medical, space, and submarine.

Among them, an industrial robot is applied to industrial automation, which is an automatically controlled and reprogrammable multipurpose manipulator, refers to a robot that can be programmed in three or more axes and can be stationary or mobile, and may include hand-guided robots, manipulator parts of mobile robots, and collaborative robots.

Meanwhile, in addition to an industrial robot as described above, an industrial robot system may be configured to include an end device, and all machines, equipment, devices, additional axes, or sensors required for the robot to perform work.

The industrial robot system is already widely operated in machining industries such as automobile manufacturing to repeat a motion corresponding to the work performed by a human arm, and in recent years, its utilization is increasing due to factors such as rising labor costs.

However, during a motion of an industrial robot, unintentional contact with a worker may cause death or serious injury, and accordingly, safety requirements for industrial robot systems and work environments are being enacted.

In addition, in order to ensure the safety of industrial robot systems and work environments, it is necessary to simulate a motion of the robot to identify and reduce a possibility or risk of collision with a worker or surrounding object before an actual operation of the industrial robot.

### DISCLOSURE OF INVENTION

### TECHNICAL PROBLEM

A technical problem to be solved by the present disclosure is to provide a method of easily setting collision information required to simulate a motion of a robot, and a device for performing the same.

### TECHNICAL SOLUTION

In order to solve the foregoing problems, a method of setting collision information for simulating a motion of a robot may include acquiring robot installation information, risk area information, and collision-prone body part information for each risk area for a workspace of the robot; setting a check point to determine a risk of collision for the robot; and calculating coordinate information and shape information on the check point based on at least some of the acquired information and the set check point.

The robot may be capable of a power and force limiting (PFL) collaborative operation, and check point information on a main body of the robot may be pre-saved.

The information calculation step may include calculating shape information on the check point using information on points surrounding the check point, wherein the information calculation step calculates a similarity for a plurality of representative shapes using information on the surrounding points, and determines a shape of the check point as one of the plurality of representative shapes based on the calculated similarity.

At least part of the method of setting collision information for robot motion simulation may be implemented as a computer-readable recording medium in which a program for executing a computer is recorded, and may be provided as the program itself.

Meanwhile, the method of setting collision information for robot motion simulation may be performed by a device according to an embodiment of the present disclosure.

A robot motion simulation device according to an embodiment of the present disclosure, which is a device for simulating a motion of a robot capable of power and force limiting (PFL) collaborative operation, may include an information acquisition module for acquiring robot installation information, risk area information, and collision-prone body part information for each risk area for a workspace of the robot; a check point setting module for setting a check point to determine a risk of collision for the robot; and an information calculation module for calculating coordinate information and shape information on the check point based on at least some of the acquired information and the set check point.

### ADVANTAGEOUS EFFECTS

According to an embodiment of the present disclosure, coordinate information and shape information on a check point may be calculated based on robot installation information, risk area information, and collision-prone body part information for each risk area set for a workspace of a robot, and the check point for determining a risk of collision set for the robot and tool, thereby easily setting collision information for simulating a motion of the robot capable of a power and force limiting (PFL) collaborative operation.

In addition, according to another embodiment of the present disclosure, a motion of a robot may be simulated according to collision information set as described above to provide a method for determining a risk of a collision of the robot in advance and reducing the risk, thereby preventing death or serious injury from occurring due to unintended contact with a worker during the motion of the robot.

### BRIEF DESCRIPTION OF THE DRAWINGS

FIG. 1 is a perspective view showing a configuration of a robot according to one embodiment of the present disclosure.
FIG. 2 is a table showing an example of allowable limits in a power and force limiting (PFL) operation mode.
FIG. 3 is a diagram showing an example of a screen provided by a robot motion simulator.
FIG. 4 is a block diagram showing a configuration of a robot motion simulation device according to one embodiment of the present disclosure.
FIG. 5 is a flowchart showing a method of setting collision information for a robot motion simulation according to one embodiment of the present disclosure.
FIGS. 6 to 15 are drawings for explaining embodiments for a method of setting area information for a workspace of a robot.
FIGS. 16 to 23 are drawings for explaining embodiments for a method of setting tool information on a check point for determining a risk of collision.

### BEST MODE FOR CARRYING OUT THE INVENTION

The following description illustrates the principles of the present disclosure. It will thus be appreciated that those skilled in the art will be able to devise various devices that, although not explicitly described or illustrated in this specification, implement the principles of the present disclosure and are included in the concept and scope of the present disclosure. Furthermore, it should be understood that all conditional terms and embodiments recited in this specification are intended only for pedagogical purposes to aid the reader in understanding the concept of the present disclosure, and are not limited to such specifically recited embodiments and conditions.

Moreover, it should be understood that all detailed description herein reciting the principles, aspects, and embodiments of the present disclosure as well as specific embodiments thereof are intended to encompass both structural and functional equivalents thereof. Additionally, it should be understood that such equivalents include both currently known equivalents as well as equivalents to be developed in the future, that is, any elements developed to perform the same function regardless of its structure.

Thus, for example, it should be understood that the block diagrams presented herein represent the conceptual view of an exemplary circuit that embodies the principles of the present disclosure. Similarly, it should be understood that any flow charts, flow diagrams, state transition diagrams, pseudocodes, and the like represent various processes which may be substantially represented in computer readable media and so executed by a computer or processor, whether or not such a computer or processor is explicitly illustrated.

The functions of various elements including a processor or a functional block represented as a concept similar thereto and illustrated in the accompanying drawings may be provided using hardware having a capability to execute appropriate software as well as dedicated hardware. When provided by the processor, the functions may be provided by a single dedicated processor, a single shared processor, or a plurality of individual processors, and some thereof may be shared with one another.

In addition, it should be understood that explicit use of the terms presented as processors, controls, or concepts similar thereto should not be interpreted by exclusively quoting hardware having an ability of executing software, and should be understood to implicitly include, without limitation, digital signal processor (DSP) hardware, and a ROM, a RAM and a non-volatile memory for storing software. Other known common hardware may also be included.

In the claims of this specification, an element expressed as a means for performing a function described in the detailed description is intended to include, for example, any method of performing a function including a combination of circuit elements or any form of software including firmware/microcode, and the like, which perform the function, and is combined with suitable circuitry for executing the software to perform the function. It should be understood that since functions provided by the various recited means are combined with one another and are combined with a scheme demanded by the claims in the present disclosure defined by the claims, any means capable of providing these functions are equivalent to means recognized from this specification.

The foregoing objects, features and advantages will be more obvious through the following detailed description associated with the accompanying drawings, and accordingly, the technological concept of the present disclosure may be easily implemented by a person having ordinary skill in the art to which the present disclosure pertains. In describing the present disclosure, moreover, the detailed description will be omitted when a specific description for publicly known technologies to which the present disclosure pertains is judged to obscure the gist of the present disclosure.

Hereinafter, embodiments of the present disclosure will be described using a collaborative robot as an example, but the present disclosure is not limited thereto, and can be applied to various robots including industrial robots.

The collaborative robot is a robot designed to interact directly with a human within a defined collaborative workspace, while a collaborative operation may refer to a working state between a robot system and an operator intentionally designed within a collaborative workspace.

Additionally, the collaborative workspace is a workspace within a safeguarded space where a robot and a human perform work simultaneously during a manufacturing operation, which may refer to a space within a workspace where a robot system (including a workpiece) and a human can perform work simultaneously during manufacturing work.

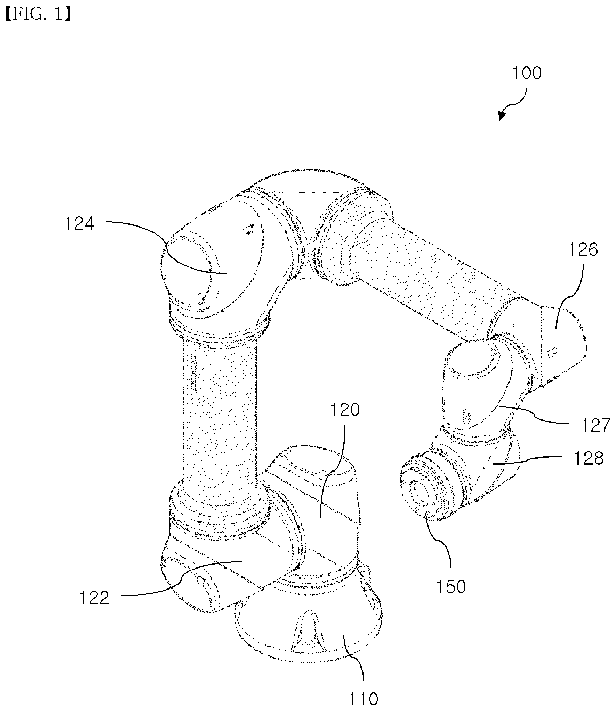

FIG. 1 shows a configuration of a robot according to one embodiment of the present disclosure, in which the robot 100 may be configured to include a base 110, a plurality of joints 120 to 128, and a tool flange 150.

Referring to FIG. 1, the base 110 is a part for fixing the robot 100, and a cable connection connector between the robot 100 and the control box may be disposed on the base 110.

The tool flange 150 is a part that mounts a gripper or tool on the robot 100, and input/output ports for controlling the gripper or tool and buttons for direct teaching may be arranged at positions adjacent to the tool flange 150.

Meanwhile, between the base 110 and the tool flange 150, a base joint 120, a shoulder joint 122, an elbow joint 124, a first wrist joint 126, a second wrist joint 127, and a third wrist joint 128 may be provided so as to enable a six-axis joint motion of the robot 100.

The robot 100 having a structure as described with reference to FIG. 1 may enable a collaborative operation, and the collaborative operation may include one or more of safe monitored stop, hand guiding, speed and position monitoring, and power and force limiting (PFL).

In the safe monitored stop method, a safe monitored stop function is used to stop the robot's motion before an operator enters a collaborative workspace to interact with a robot system and complete work.

When there is no operator in the collaborative workspace, the robot 100 operates non-cooperatively, and an operator is allowed to enter the collaborative workspace when the safe monitored function is activated to stop the robot's motion while the robot system is present in the collaborative workspace. Meanwhile, after the operator leaves the collaborative workspace, the robot system's movement may resume without further intervention.

In the hand guiding method, the operator uses a hand-operated device to transmit a motion command to the robot system, and the robot 100 must complete safe monitored stop before the operator is permitted to enter the collaborative workspace and perform hand guiding work.

The work is performed by manually operating guiding devices positioned at or near the robot's end device, and the robot system used for hand guiding must have additional functions such as force output, virtual safety zones or tracking technology.

In the speed and position monitoring method, the robot system and the operator are allowed to move simultaneously in the collaborative workspace, and risk level reduction may be achieved by maintaining a minimum protective separation distance between the operator and the robot 100.

In this case, while the robot 100 is operating, a distance between the robot system and the operator must never become closer than a protective separation distance, and the robot system stops when the separation distance decreases to a value smaller than the protective separation distance. Meanwhile, the robot system may automatically resume a motion while maintaining a minimum protective separation distance when the operator moves away from the robot system, and the protective separation distance may decrease simultaneously when the robot system slows down.

In an operation mode according to the power and force limiting (PFL) method, a physical contact between the robot system (including a workpiece) and the operator may occur intentionally or unintentionally, and a collaborative operation with limited power and force requires a robot system designed for this specific type of operation.

In this case, a risk level may be reduced by managing a risk source associated with the robot system below an allowable limit determined in a risk level assessment process through a robot or safety-rated control system that includes fundamental safety measures, and the allowable limit may be set to a maximum allowable pressure and a maximum allowable force that can be endured for each part of a human body.

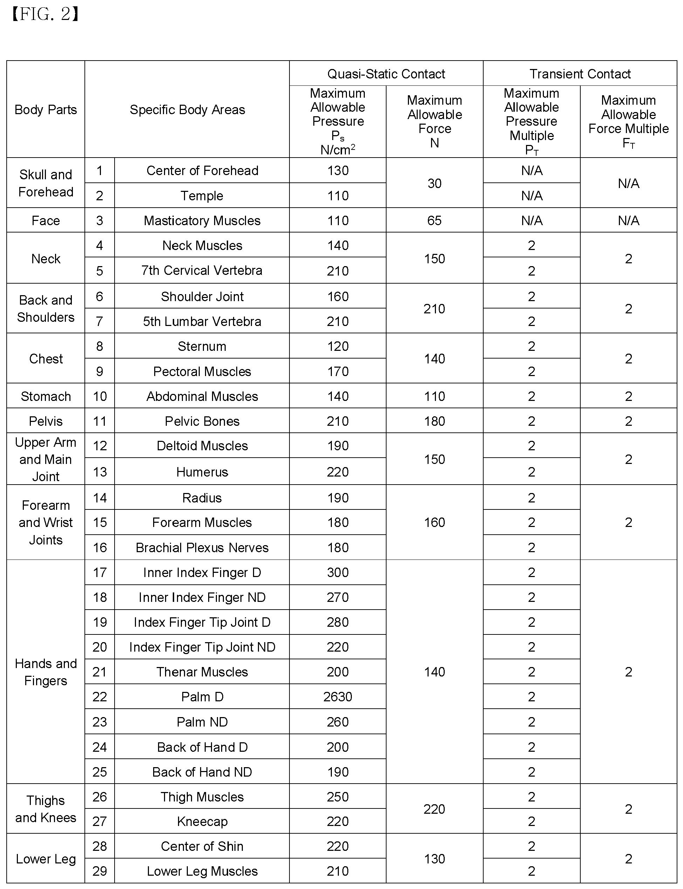

For example, allowable limits in a power and force limiting (PFL) operation mode may be set to a maximum allowable pressure and maximum allowable force per body part defined in the international standard (ISO TS 15066) as shown in FIG. 2, but the present disclosure is not limited thereto, and may be changed depending on a level of risk to be managed.

Meanwhile, during a collaborative operation using the foregoing power and force limiting (PFL), contact between a collaborative robot and an operator's body part may occur as a contact situation intended as part of the work process, an incidental contact situation caused by not following the work sequence, or a failure type that causes a contact situation.

Furthermore, a possible contact between a moving part of the robot system and a human body may be divided into a quasi-static contact and a transient contact.

The quasi-static contact is a contact between an operator and a robot system component that occurs where the operator's body part can be clamped between a moving component of the robot system and a fixed or moving component of another robot, and in this case, the robot system may apply pressure and force to the trapped part of the body for a significant period of time before the situation is relieved.

Meanwhile, the transient contact is a contact between an operator and a robot system component that occurs where the operator's body part is not clamped to a moving component of the robot system but the body can be retracted or moved away from the robot, and an actual contact may be made for a short period of time, which may be defined by an inertia of the robot, an inertia of the body part, and a relative speed between the two.

A risk level of potential contact between the robot and the operator as described above may be reduced by considering a method of preventing a possible contact between the operator and the robot system from causing injury to the operator.

For example, the risk level may be reduced by identifying the conditions under which a contact occurs, assessing a potential risk level of contact, designing the robot system and workspace that allow a contact to occur less frequently or be avoided, and applying a risk level reduction means to keep a contact situation below a threshold value.

Here, for risk level assessment, it must be assumed that an operator is not protected from a potential contact by a risk level reduction means such as personal protective equipment, and criteria such as an exposed body part of the operator, an origin of contact event, a probability or frequency of occurrence, a type of contact event, a contact area, a speed, a force, a pressure, a momentum, mechanical power, energy, and other quantitative items that can characterize a physical contact event may be considered.

Meanwhile, in order to reduce the risk level assessed as above, a passive method related to a mechanical design of the robot system or an active method related to a control design of the robot system may be performed.

For example, passive safety design measures may include increasing a contact surface area, absorbing energy, extending energy transfer time or reducing impact force, or limiting moving mass.

Specifically, circular edges and corners, smooth surfaces or flexible surfaces may be used to increase the contact surface area, or fillers, cushioning materials, deformable components, complex joints or links may be used to absorb energy, extend energy transfer time or reduce impact force.

Active safety design measures may include limiting forces and torques, limiting the speed of moving components, limiting momentum as a function of mass and speed, limiting mechanical power or energy, utilizing safety-rated flexible shafts and space limitation functions, utilizing safety-rated monitored stop functions, utilizing detection to anticipate or recognize a contact, but the present disclosure is not limited thereto.

Meanwhile, when the risk level is not sufficiently reduced by a combination of passive or active risk level reduction methods as described above, other risk level reduction methods, including firewalls or safety devices, may be required.

As described above, the robot system is designed such that the risk level to the operator is reduced below a threshold value by not exceeding the threshold value applicable to quasi-static and transient contacts determined by the risk level assessment.

A robot having a collaborative operation function in a power and force limiting (PFL) mode may include a function of setting allowable threshold values such as force, torque, speed, momentum, mechanical power, axis range or space range.

For example, eliminating hazards associated with a transient contact may include speed limits for moving parts (robots, work tools, workpieces, etc.) and appropriate design of physical characteristics such as a surface area of the moving parts that come into contact with the operator.

Additionally, risk level reduction associated with a quasi-static contact may include speed limits and physical characteristics similar to those for a transient contact, and in addition may include the component design characteristics of the robot system that is likely to grab or press an operator or a part of the operator's body.

In the above, the robot 100 and the robot system according to one embodiment of the present disclosure have been described with reference to FIGS. 1 and 2, but the present disclosure is not limited thereto, and the present disclosure may be applied to various robots based on international standards (ISO 10218-1, ISO 10218-2, ISO TS 15066, ISO 12100, ISO 13850, ISO 13855, IEC 60204-1) related to a robot and a robot system.

According to the present disclosure, in order to ensure safety for the robot system and the working environment, a robot motion simulation may be performed to simulate a motion of the robot 100 to identify a possibility or risk of collision with a worker or surrounding object.

For example, in the case of a robot having a collaborative operation function in a power and force limiting (PFL) mode, when robot-related information, mounted tool-related information, check point-related information on collision parts, and robot motion-related information are input, if a collision occurs during a motion of the robot, information on a force and pressure to be estimated may be calculated and displayed on a simulator.

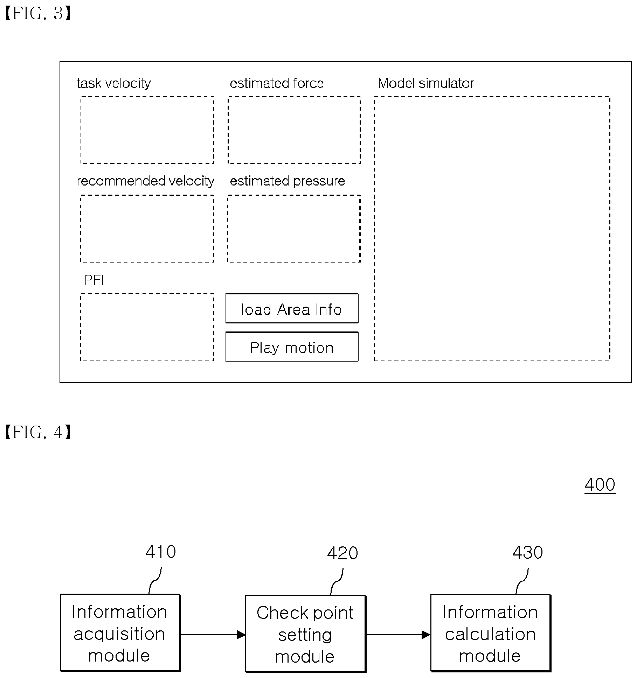

FIG. 3 shows an example of a screen provided by a robot motion simulator, in which a collision force and pressure estimated during a robot motion may be calculated by using information on an area where the robot is installed and information on a tool mounted on the robot, and displayed in graphs on the left side of the screen, and a robot motion corresponding thereto may be sequentially displayed on the right side of the screen.

Meanwhile, a pressure force index (PFI) indicating a risk level of robot motion may be calculated based on the estimated collision force and pressure, and the calculated risk level PFI may be displayed together in a graph on the left side of the screen, and if the PFI exceeds a limit value (e.g., 100), a risk level assessment result may be displayed in a graph together with that motion of the robot.

Additionally, for a motion of the robot in which the risk level PFI exceeds the limit value as described above, a motion speed (e.g., maximum motion speed) of the robot to reduce the PFI to below the limit value may be calculated and provided.

The simulator that performs a robot motion simulation as described above may be included in a robot or robot system to save information related to the motion of the robot in advance, or may be present outside the robot or robot system to receive information related to the motion of the robot.

The foregoing robot motion simulator may be implemented with software and/or hardware resources necessary to implement the technical concept of the present disclosure, and does not necessarily refer to one physical element or one device.

That is, the robot motion simulator may refer to a logical combination of software and/or hardware provided to implement the technical concept of the present disclosure, and may be implemented as a set of logical components for implementing the technical concept of the present disclosure by being installed in devices spaced apart from each other to perform each function if necessary.

FIG. 4 is a block diagram showing a configuration of a robot motion simulation device according to one embodiment of the present disclosure, in which the shown robot motion simulation device 400 is a device for simulating a motion of a robot capable of a power and force limiting (PFL) collaborative operation.

Referring to FIG. 4, the robot motion simulation device 400 may be configured to include an information acquisition module 410, a check point setting module 420, and an information calculation module 430.

The information acquisition module 410 acquires robot installation information, risk area information, and collision-prone body part information for each risk area for a workspace of a robot.

For example, the information acquisition module 410 may acquire an image of the workspace of the robot, set a scale of the acquired image, and set an installation angle and installation position of the robot.

Here, one or more risk areas may be set on the acquired image, and a body part with a high probability of collision may be set for each of the set risk areas.

The check point setting module 420 sets a check point for determining a risk of collision for the robot.

For example, the check point setting module 420 may acquire an image of a tool mounted on a robot, and set the check point on the acquired image.

Here, the check point setting module 420 may calculate a similarity for a plurality of representative shapes using information on points surrounding a check point, and determine a shape of the check point as one of the plurality of representative shapes based on the calculated similarity.

The information calculation module 430 calculates coordinate information and shape information on a check point based on at least some of the acquired information and the set check point.

In this specification, a module may refer to a functional and structural combination of hardware for performing the technical concept of the present disclosure and software for driving the hardware. For example, the module may refer to a logical unit of a given piece of code and the hardware resources required to execute that code, and does not necessarily refer to a physically connected code or a type of hardware.

According to the foregoing embodiment of the present disclosure, coordinate information and shape information on a check point may be calculated based on robot installation information, risk area information, and collision-prone body part information for each risk area set for a workspace of a robot, and the check point for determining a risk of collision set for the robot and tool, thereby easily setting collision information for simulating a motion of the robot capable of a power and force limiting (PFL) collaborative operation.

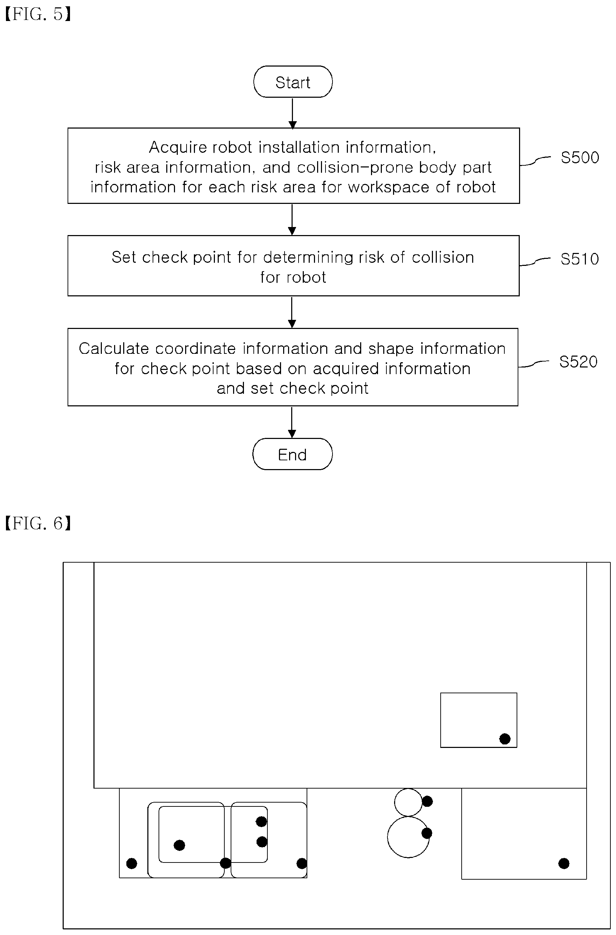

FIG. 5 is a flowchart showing a collision information setting method for a robot motion simulation according to one embodiment of the present disclosure, and an example performed by the robot motion simulation device 400 as described with reference to FIG. 4 will be described.

The simulation device 400 acquires robot installation information, risk area information, and collision-prone body part information for each risk area for a workspace of a robot (step S500).

In step S500, an image for a workspace of a robot may be acquired, a scale of the acquired image may be set, and at least one of an installation angle and installation position of the robot may be set.

In addition, one or more risk areas may be set on the acquired image, and for each of the set risk areas, a body part corresponding to at least one of the skull and forehead, face, neck, back and shoulder, chest, abdomen, pelvis, upper arms and elbow joints, lower arms and wrist joints, hands and fingers, thighs and knees, and lower legs may be set.

Referring to FIGS. 6 to 15, embodiments for a method of setting area information on a workspace of a robot in step S500 will be described in more detail.

Referring to FIG. 6, a 2D image representing a workspace of a robot may be input, but the present disclosure is not limited thereto, and a 3D image representing the workspace of the robot in three dimensions may also be input.

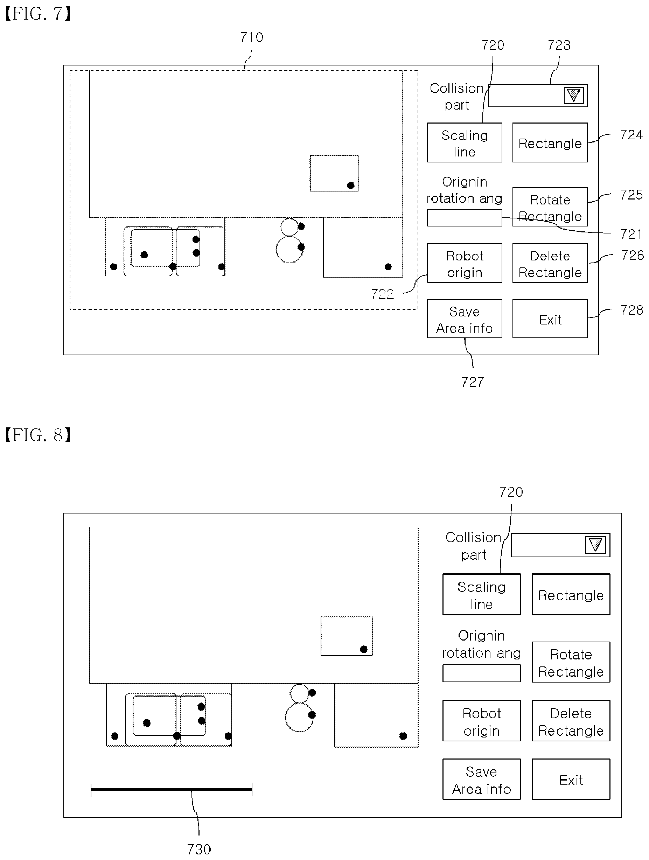

Referring to FIG. 7, a workspace 710 of a robot may be displayed on a screen of the simulation device 400, and a user interface 720 to 728 for setting area information on the workspace 710 may be provided.

As shown in FIG. 8, a user may select a "scaling line" button 720 on the screen of the simulation device 400, and then set an actual size of the workspace 710 displayed on the screen using a scaling bar 730.

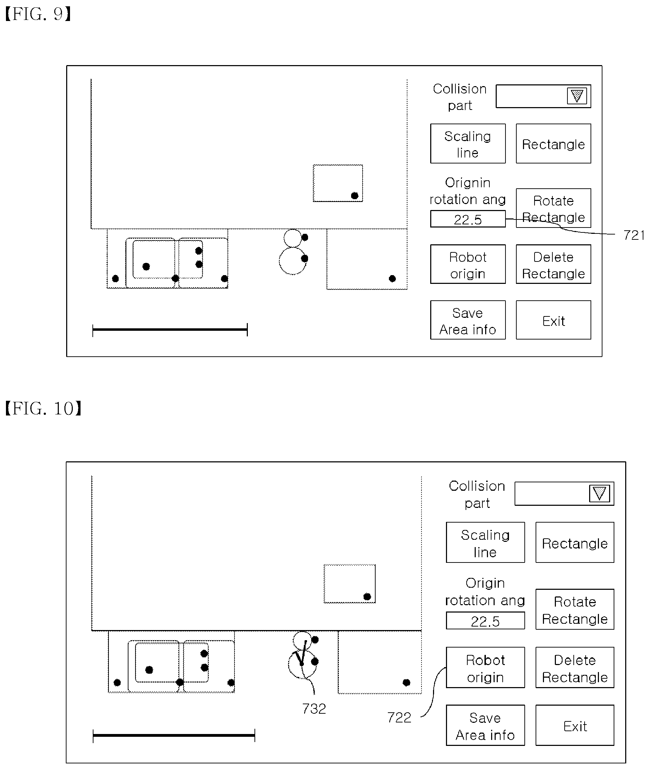

Next, the user may input an angle at which the robot is installed in an "origin rotation ang" input field 721 as shown in FIG. 9, select a "robot origin" button 722 as shown in FIG. 10, and then set a position at which the robot is installed on the screen using a cursor 732.

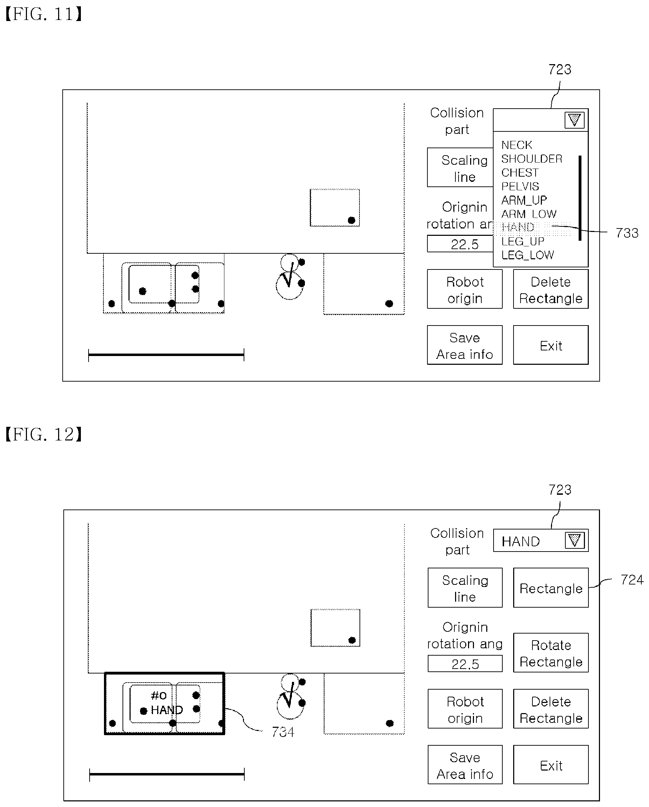

Furthermore, when the user selects a body part that can collide in a "collision part" selection window 723 as shown in FIG. 11, then selects a "rectangle" button 724 as shown in FIG. 12 and then sets a risk area 734, a body part (hand) that can collide in that risk area 734 is displayed together with the risk area 734 on the screen.

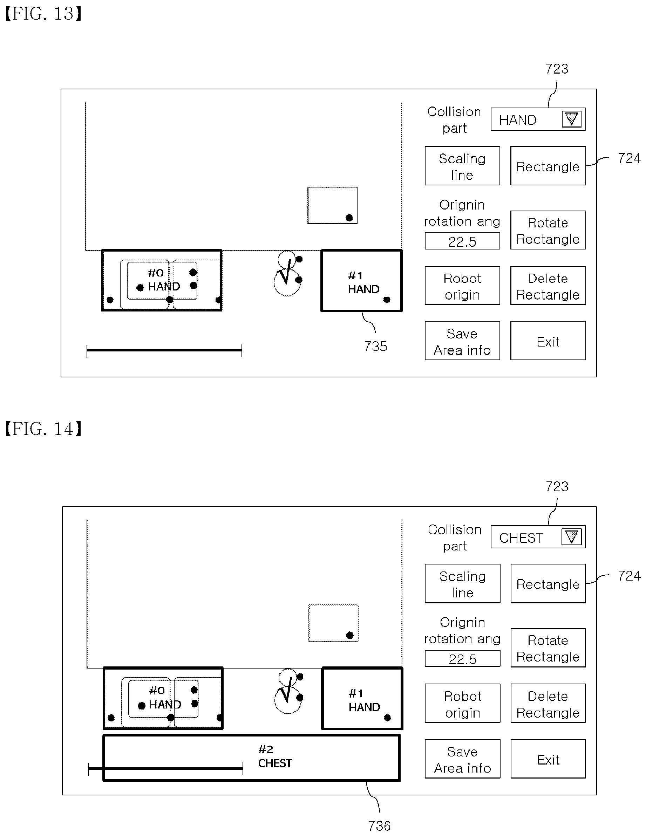

Additionally, as shown in FIGS. 12 and 13, the user may set risk areas 735, 736 and a collision-prone body part for each of the risk areas 735, 736 using the foregoing method.

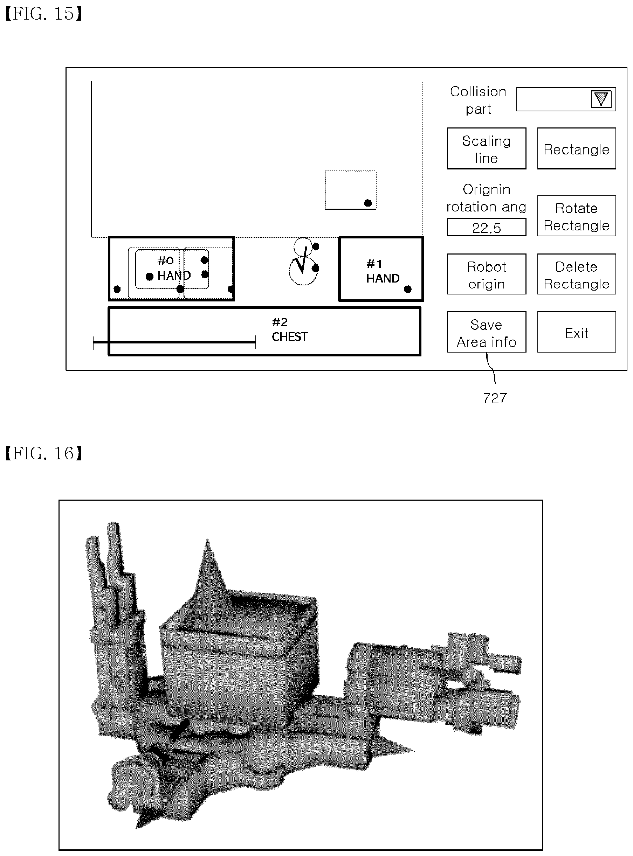

As described above, when area information setting for the workspace 710 of the robot is completed, the user may select a "save area info" button 727 as shown in FIG. 15 to save the set area information.

The simulation device 400 sets a check point for determining a risk of collision for the robot (step S510), and calculates coordinate information and shape information for a check point based on at least some of the information acquired in step S500 and the check point set in step S510 (step S520).

In step S510, an image of a tool mounted on the robot may be acquired, and a check point may be set on the acquired image.

Meanwhile, a check point for determining a risk of collision may be set in a main body of the robot rather than in the tool, and check point information on the main body of the robot may already be saved in the simulation device 400.

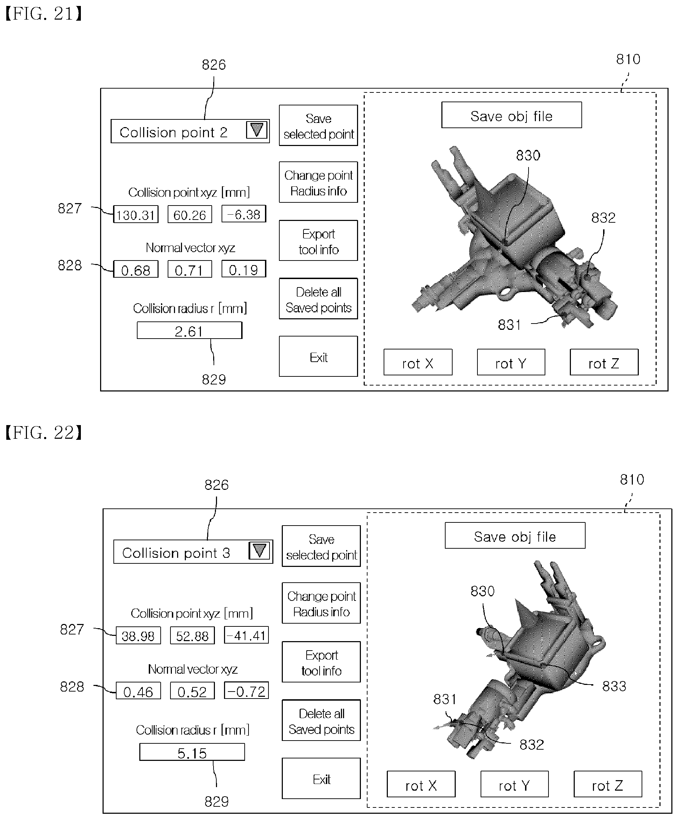

Referring to FIGS. 16 to 23, embodiments of a method of setting a check point and calculating coordinate information and shape information for the check point will be described in more detail.

Referring to FIG. 16, a 3D image representing a tool mounted on a robot may be input, but the present disclosure is not limited thereto, and may also be a 2D image acquired by photographing a tool mounted on a robot.

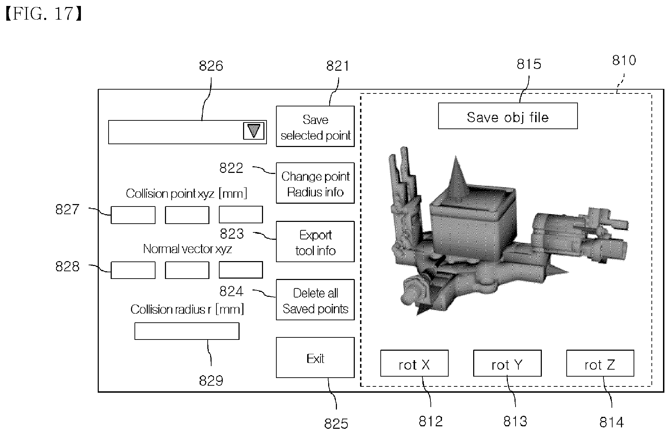

Referring to FIG. 17, a tool 810 mounted on a robot may be displayed on the screen of the simulation device 400, and a user interface 812 to 815, 821 to 829 for setting a check point for the tool 810 may be provided.

In step S520, shape information on the check point may be calculated by using information on points surrounding the check point.

For example, a similarity for a plurality of representative shapes may be calculated by using information on points surrounding a check point, and a shape of the check point may be determined as one of the plurality of representative shapes based on the calculated similarity.

Here, the plurality of representative shapes may include at least one of a half sphere, a corner, a cylinder, and a flat, but the present disclosure is not limited thereto.

Meanwhile, a normal vector for the check point may be calculated by using shape information calculated as described above.

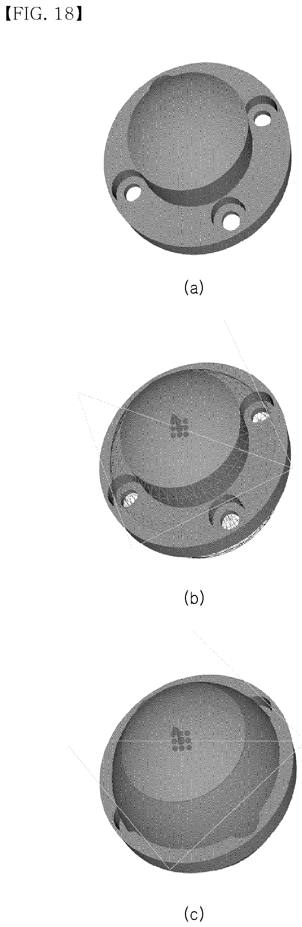

For example, when setting a check point for a tool having a shape as shown in (a) of FIG. 18, the user may select a desired check point on a 3D image as shown in (b) of FIG. 18.

In this case, points located around the check point selected by the user may be set, and a similarity with a representative shape may be calculated by fitting each of the plurality of representative shapes using information (e.g., position and vector information, etc.) on surrounding points.

As shown in (c) of FIG. 18, a representative shape having a highest similarity among the plurality of representative shapes may be determined, and information on the determined representative shape may be saved as shape information on the check point.

Here, the representative shape may be a half sphere, and a radius of a half sphere having the highest similarity may be obtained as shape information on the check point using information on the surrounding points of the check point.

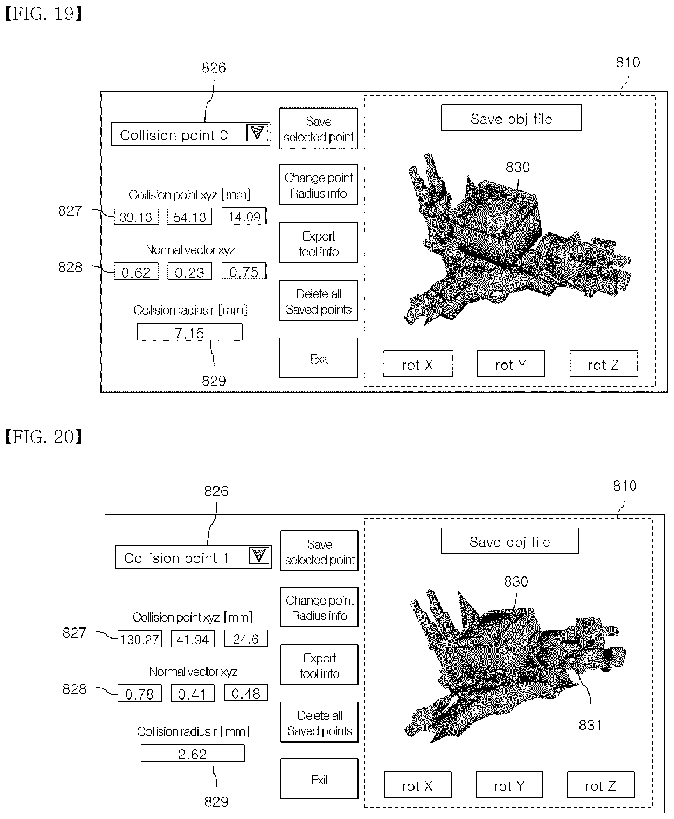

As shown in FIG. 19, when the user selects a check point 830 on a 3D image of a tool displayed on the screen of the simulation device 400, check point identification information may be entered into a check point identification window 826, a position of the check point may be automatically entered into a "collision point xyz" display window 827, and a normal vector for the check point may be automatically entered into a "normal vector xyz" display window 828.

Additionally, according to the check point shape information calculated as described above, a radius of a half sphere similar to the check point may be automatically entered into a "collision radius" display window 829.

Furthermore, as shown in FIGS. 20 to 22, the user may additionally set check points 831, 832, 833 using the foregoing method, and the position, normal vector, and shape information (radius) of each check point may be calculated and automatically input at each additional setting.

According to another embodiment of the present disclosure, while photographing an actual tool using a device such as a tablet PC, a check point may be directly selected on an image of the tool displayed on the screen.

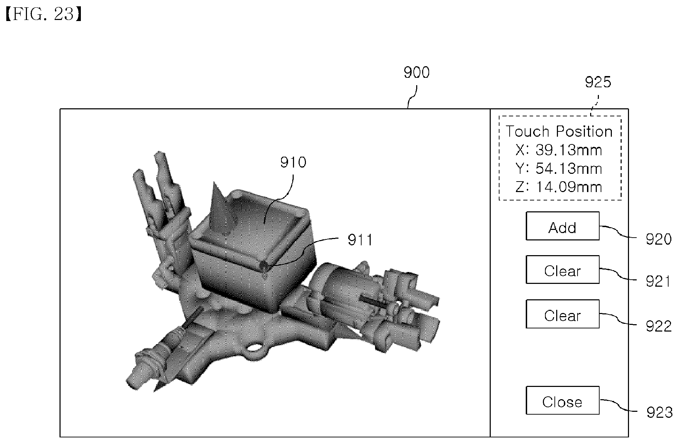

Referring to FIG. 23, an image 910 of a tool being photographed may be displayed on a screen 900 of the tablet PC, and when the user presses an "add" button 920 and then touches a desired check point 911, position information 925 on the touched check point 911 may be displayed on the screen.

Additionally, on the screen 900 of the tablet PC shown in FIG. 23, the normal vector and shape information for the foregoing check point 911 may be calculated and additionally displayed.

In the above, it has been described as an example in which the collision information setting method for robot motion simulation according to one embodiment of the present disclosure is performed by the robot motion simulation device, but the present disclosure is not limited thereto, and may be performed on a personal computer (PC), laptop, tablet, and the like, performed on a teaching pendant provided in a robot system, or performed on a control station for controlling the robot or on the robot itself.

In addition, according to another embodiment of the present disclosure, a motion of a robot may be simulated according to collision information set as described above to provide a method for determining a risk of a collision of the robot in advance and reducing the risk, thereby preventing death or serious injury from occurring due to unintended contact with a worker during the motion of the robot.

For example, when area information and check point information may be set for the workspace of the robot according to the collision information setting method described with reference to FIGS. 4 to 23, and position, normal vector, and shape information for the check point may be calculated, a risk level of collision for the check point may be calculated according to the set and calculated information.

A risk level of collision for a check point may be computed by using a pressure force index (PFI) as shown in the following Equation 1.$PFI = max \left(\frac{{f}_{est}}{{f}_{max}}, \frac{{p}_{est}}{{p}_{max}}\right) ∗ 100$

In Equation 1, "f_est", which is a force value generated in the event of a collision estimated through a simulation of a robot motion, may be computed as in the following Equation 2.${f}_{est} = {v}_{rel} \sqrt{μk}$

In Equation 2, vᵣₑₗ is a relative velocity between a robot and a human, µ is a composite mass of the robot and the human, and k is a composite stiffness of the robot and the human.

In addition, in Equation 1, "p_est", which is a pressure value generated in the event of a collision estimated through simulation of robot motion, may be computed as in the following Equation 3.${p}_{est} = {\left(\frac{6 {FE}^{∗ 2}}{{π}^{3} {R}_{s}^{2}}\right)}^{1 / 3}$

Furthermore, in Equation 1, "f_max" is a force limit value for each human body part, and "p_max" is a pressure limit value for each human body part, and each may have values as described with reference to FIG. 2, but the present disclosure is not limited thereto, and may be set to values required by the standard.

When a PFI indicating a risk level of collision for a check point is calculated as described above, if the PFI value exceeds 100, a force or pressure estimated by the simulation device 400 in the event of a collision may be out of a range of the limit value, and it may be determined that there is a risk of serious damage to the body when the check point collides with a human during a motion of that robot.

Meanwhile, for a motion in which the PFI value exceeds 100 as described above, a risk reduction method may be provided to lower the PFI value to 100 or less.

The foregoing methods according to the present disclosure may be produced as a program to be executed on a computer and stored in a computer-readable recording medium, and examples of computer-readable recording media include a ROM, a RAM, a CD-ROM, a magnetic tape, a floppy disk, an optical data storage device, and the like.

The computer-readable recording medium may be distributed over computer systems connected via a network, and stored and executed as computer-readable codes in a distributed manner. Furthermore, functional programs, codes, and code segments for implementing the method may be easily inferred by programmers in the technical field to which the present disclosure pertains.

While the preferred embodiments of the present disclosure have been illustrated and described above, it will be of course understood by those skilled in the art that various modifications may be made without departing from the gist of the disclosure as defined in the following claims, and it is to be noted that those modifications should not be understood individually from the technical concept and prospect of the present disclosure.

## Claims

1. A method of setting collision information for simulating a motion of a robot, the method comprising:
acquiring robot installation information, risk area information, and collision-prone body part information for each risk area for a workspace of the robot;
setting a check point to determine a risk of collision for the robot; and
calculating coordinate information and shape information on the check point based on at least some of the acquired information and the set check point.

2. The method of claim 1, wherein the robot is capable of a power and force limiting (PFL) collaborative operation.

3. The method of claim 1, wherein the information acquisition step comprises:
acquiring an image of the workspace of the robot;
setting a scale of the acquired image; and
setting at least one of an installation angle and installation position of the robot.

4. The method of claim 3, wherein one or more risk areas are set on the acquired image, and
wherein for each of the set risk areas, a body part corresponding to at least one of the skull and forehead, face, neck, back and shoulder, chest, abdomen, pelvis, upper arms and elbow joints, lower arms and wrist joints, hands and fingers, thighs and knees, and lower legs is set.

5. The method of claim 1, wherein the check point setting step comprises:
acquiring an image of a tool mounted on the robot; and
setting the check point on the acquired image.

6. The method of claim 5, wherein check point information on a main body of the robot is pre-saved.

7. The method of claim 1, wherein the information calculation step comprises:
calculating shape information on the check point using information on points surrounding the check point.

8. The method of claim 7, wherein the information calculation step calculates a similarity for a plurality of representative shapes using information on the surrounding points, and determines a shape of the check point as one of the plurality of representative shapes based on the calculated similarity.

9. The method of claim 8, wherein the plurality of representative shapes comprise:
at least one of a half sphere, a corner, a cylinder, and a flat.

10. The method of claim 7, wherein the information calculation step comprises:
calculating a normal vector for the check point using the calculated shape information.

11. A computer program stored in a computer-readable recording medium for executing the method of any one of claims 1 to 10 in combination with hardware.

12. A device of performing the method of any one of claims 1 to 10.

13. A device for simulating a motion of a robot capable of power and force limiting (PFL) collaborative operation, the device comprising:
an information acquisition module for acquiring robot installation information, risk area information, and collision-prone body part information for each risk area for a workspace of the robot;
a check point setting module for setting a check point to determine a risk of collision for the robot; and
an information calculation module for calculating coordinate information and shape information on the check point based on at least some of the acquired information and the set check point.

14. The device of claim 13, wherein the information acquisition module acquires an image of the workspace of the robot, sets a scale of the acquired image, and sets an installation angle and installation position of the robot, and
wherein one or more risk areas are set on the acquired image, and a body part with a high possibility of collision is set for each of the set risk areas.

15. The device of claim 13, wherein the check point setting module acquires an image of a tool mounted on the robot, and sets the check point on the acquired image, and
wherein the check point setting module calculates a similarity for a plurality of representative shapes using information on surrounding points of the check point, and determines a shape of the check point as one of the plurality of representative shapes based on the calculated similarity.
